(19) Europäisches Patentamt
European Patent Office
Office européen des brevets

(11) **EP 4 738 595 A1**

(12) **EUROPEAN PATENT APPLICATION**
published in accordance with Art. 153(4) EPC

(43) Date of publication:
06.05.2026 Bulletin 2026/19

(21) Application number: 23942873.3

(22) Date of filing: 29.06.2023

(51) International Patent Classification (IPC):
$H01M\ 50/50^{(2021.01)}$    $H01M\ 10/0587^{(2010.01)}$
$H01M\ 50/502^{(2021.01)}$    $H01M\ 50/531^{(2021.01)}$
$H01M\ 50/533^{(2021.01)}$

(52) Cooperative Patent Classification (CPC):
Y02E 60/10

(86) International application number:
PCT/CN2023/103963

(87) International publication number:
WO 2025/000364 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Ningde Amperex Technology Limited
Ningde, Fujian 352100 (CN)

(72) Inventors:
• CHEN, Wen
  Ningde, Fujian 352100 (CN)
• SU, Shiwei
  Ningde, Fujian 352100 (CN)
• ZHANG, Juntao
  Ningde, Fujian 352100 (CN)

(74) Representative: Kraus & Lederer PartGmbB
Thomas-Wimmer-Ring 15
80539 München (DE)

(54) **ELECTROCHEMICAL APPARATUS AND ELECTRIC DEVICE**

(57) This application discloses an electrochemical apparatus and an electric device. The electrochemical apparatus includes a first housing portion and a second housing portion of opposite polarities, an electrode assembly, and a first connector. The electrode assembly includes an electrode plate assembly, a first tab, and a second tab. A first electrode plate of the electrode plate assembly is located on a winding inner side relative to a second electrode plate. The first tab is connected to a first region of the first electrode plate. The first tab includes a second region connected to the first housing portion. The second tab is connected to a third region of the second electrode plate. The first connector is connected to the first housing portion, and includes a fourth region configured to be connected to an electric device. A winding length of the first region extending beyond the third region is less than one turn. An angle formed by rotating the third region to the first region around a winding center is θ, satisfying: $45° \leq \theta \leq 135°$. An angle formed by rotating the first region to the fourth region around the second region is α, satisfying: $-60° \leq \alpha \leq 45°$. The electrochemical apparatus of this application is conducive to reducing an axial magnetic field at the end face, thereby reducing interference with the electric device.

FIG. 5

**Description**

**TECHNICAL FIELD**

This application relates to the technical field of energy storage, and in particular, to an electrochemical apparatus and an electric device.

**BACKGROUND**

For a battery with a wound structure, due to its special spiral involute structure, a relatively strong axial magnetic field is generated at an end face of the wound structure. This causes significant interference with electric devices such as Bluetooth earphones, and affects normal use of the electric devices.

**SUMMARY**

In view of the above situation, this application provides an electrochemical apparatus that is conducive to reducing an axial magnetic field at an end face of a wound structure, and consequently reducing the interference from the electrochemical apparatus to an electric device.

According to a first aspect, this application provides an electrochemical apparatus. The electrochemical apparatus includes a housing, an electrode assembly, and a first connector. The electrode assembly is accommodated in the housing. The first connector is located outside the housing. The housing includes a first housing portion and a second housing portion of opposite polarities. The electrode assembly includes an electrode plate assembly, a first tab, and a second tab. The electrode plate assembly includes a first electrode plate and a second electrode plate arranged in a wound manner. The first electrode plate includes a first current collector and a first active layer located on a surface of the first current collector. The second electrode plate includes a second current collector and a second active layer located on a surface of the second current collector. A winding start section of the first active layer is located on a winding inner side of the electrode plate assembly relative to a winding start section of the second active layer. The first tab includes a first connecting portion and a first bent portion. The first connecting portion is connected to a first region of a winding tail section of the first current collector. The first bent portion is bent toward a first end face of the electrode plate assembly. Along a width direction of the first electrode plate, the first bent portion is located on one side of the electrode plate assembly. The first bent portion includes a second region connected to the first housing portion. The second tab includes a second connecting portion and a second bent portion. The second connecting portion is connected to a third region of a winding tail section of the second current collector. The second bent portion is bent toward a second end face of the electrode plate assembly. The second end face is disposed opposite to the first end face along the width direction of the first electrode plate. Along the width direction of the first electrode plate, the second bent portion is located on one side of the electrode plate assembly facing away from the first bent portion. Along a winding direction of the electrode plate assembly from inside to outside, the first region extends beyond the third region, and a winding length of the first region extending beyond the third region is less than one turn. The first connector is connected to the first housing portion, and includes a fourth region configured to be connected to an external load. When viewed along the width direction of the first electrode plate, along the winding direction of the electrode plate assembly from inside to outside, an angle formed by rotating a ray from a winding center of the electrode plate assembly to a center of the third region to a ray from the winding center to a center of the first region is $\theta$, satisfying: $45° \leq \theta \leq 135°$. When viewed along the width direction of the first electrode plate, an angle formed by rotating a ray from a center of the second region to the center of the first region to a ray from the center of the second region to a center of the fourth region is $\alpha$, satisfying: $-60° \leq \alpha \leq 45°$. Along the winding direction of the electrode plate assembly from inside to outside, the angle $\alpha$ formed by rotating the ray from the center of the second region to the center of the first region to the ray from the center of the second region to the center of the fourth region is a positive value. Along a direction opposite to the winding direction of the electrode plate assembly from inside to outside, the angle $\alpha$ formed by rotating the ray from the center of the second region to the center of the first region to the ray from the center of the second region to the center of the fourth region is a negative value.

Through research, the inventors of this application finds that due to the special spiral involute structure of a battery of a wound structure, an effective current path length of the first electrode plate on the winding inner side is less than that of the second electrode plate on the winding outer side, resulting in a relatively strong axial magnetic field at both end faces of the jelly roll. In addition, the current flowing through the bent portion, parallel to the end face of the jelly roll, of the tab and the connector disposed outside the housing also affects the axial magnetic field. In this application, on the one hand, by extending the effective length of the first electrode plate on the winding inner side, this application makes the first region to extend beyond the third region, and makes $\theta$ to satisfy: $45° \leq \theta \leq 135°$. When the electrode assembly discharges and generates a current, a magnetic field generated by an overhang of the first electrode plate beyond the third region can at least partially counteract the axial magnetic field generated by the spiral involute structure. On the other hand, by controlling the first tab and the first connector to satisfy: $-60° \leq \alpha \leq 45°$, the axial magnetic field generated by the current that flows through the first tab and the first connector further counteracts the axial magnetic field generated by the spiral involute structure at the first end face, thereby significantly reducing the interference of the electrochemical apparatus with the electric device.

In some embodiments, $60° \leq \theta \leq 120°$. In this way, the magnetic field generated by the overhang of the first electrode plate beyond the third region can more effectively counteract the axial magnetic field generated by the spiral involute structure of the electrode plate assembly, thereby further reducing the interference of the electrochemical apparatus with the electric device.

In some embodiments, $-25° \leq \alpha \leq 25°$. In this way, the axial magnetic field generated by the current flowing through the first tab and the first connector more effectively counteracts the axial magnetic field generated by the spiral involute structure of the electrode plate assembly, thereby further reducing the interference of the electrochemical apparatus with the electric device.

In some embodiments, $30° \leq \theta + \alpha \leq 135°$. In this way, the magnetic field generated by the overhang of the first electrode plate beyond the third region and the axial magnetic field generated by the current flowing through the first tab and the first connector can more effectively counteract the axial magnetic field generated by the spiral involute structure of the electrode plate assembly, thereby further reducing the interference of the electrochemical apparatus with the electric device.

In some embodiments, the first electrode plate is a negative electrode plate, and the second electrode plate is a positive electrode plate. Along the direction opposite to the winding direction of the electrode plate assembly from inside to outside, the winding start section of the first active layer extends beyond the winding start section of the second active layer. In some embodiments, along the winding direction of the electrode plate assembly from inside to outside, a winding tail section of the first active layer extends beyond a winding tail section of the second active layer. In this way, in the winding direction of the electrode plate assembly, the end portion of the negative active layer extends beyond the positive active layer, thereby reducing the risk of lithium plating and improving the safety of the electrochemical apparatus.

In some embodiments, the first housing portion includes a top wall, a bottom wall, and a sidewall. The first bent portion is connected to the bottom wall. The second housing portion includes an electrode pole. The top wall is provided with a through-hole. The electrode pole is disposed in the through-hole.

In some embodiments, along the winding direction of the electrode plate assembly from inside to outside, the winding tail section of the first current collector includes a blank section extending beyond the first region and uncoated with the first active layer on any surface. The blank section covers the winding tail section of the second current collector. In this way, the blank section of the first current collector is disposed between the winding tail section of the second current collector and the first housing portion, thereby enhancing the isolation between the second current collector and the first housing portion, and consequently reducing the risk of short circuit caused by direct contact between the second current collector and the first housing portion.

In some embodiments, the second bent portion includes a fifth region connected to the second housing portion. The electrochemical apparatus further includes a second connector. The second connector is connected to the second housing portion and includes a sixth region configured to be connected to an external load. When viewed along the width direction of the first electrode plate, an angle formed by rotating a ray from a center of the fifth region to the center of the third region to a ray from the center of the fifth region to a center of the sixth region is $\beta$, satisfying: $-60° \leq \beta \leq 45°$. Along the winding direction of the electrode plate assembly from inside to outside, the angle $\beta$ formed by rotating the ray from the center of the fifth region to the center of the third region to the ray from the center of the fifth region to the center of the sixth region is a positive value. Along the direction opposite to the winding direction of the electrode plate assembly from inside to outside, the angle $\beta$ formed by rotating the ray from the center of the fifth region to the center of the third region to the ray from the center of the fifth region to the center of the sixth region is a negative value. In this way, by controlling the second tab and the second connector to satisfy $-60° \leq \beta \leq 45°$, the axial magnetic field generated by the current flowing through the second tab and the second connector further counteracts the axial magnetic field generated by the spiral involute structure at the second end face, thereby further reducing the interference with the electric device.

In some embodiments, the electrode plate assembly further includes a first separator. The first separator is disposed between the first electrode plate and the second electrode plate. Along the winding direction of the electrode plate assembly from inside to outside, a winding tail section of the first separator extends beyond the first electrode plate. In this way, the winding tail end of the first electrode is covered by the first separator, thereby reducing the risk of direct contact between the first electrode plate and the second electrode plate.

In some embodiments, the electrode plate assembly further includes a second separator. The second separator is disposed between the first electrode plate and the second electrode plate. Along the winding direction of the electrode plate assembly from inside to outside, a winding tail section of the second separator extends beyond the second electrode plate. In this way, the winding tail end of the second electrode plate is covered by the second separator, thereby reducing the risk of direct contact between the second electrode plate and the first electrode plate or the housing.

In some embodiments, the electrochemical apparatus further includes an insulation piece. The insulation piece is disposed between the housing and the electrode plate assembly. This reduces the risk of direct contact between the electrode plate assembly and the housing, thereby reducing the risk of an internal short circuit in the electrochemical apparatus.

According to a second aspect, this application further provides an electric device. The electric device includes the electrochemical apparatus according to any one of the above embodiments. The axial magnetic field of the electrochemical apparatus in the above embodiments is reduced, thereby reducing electromagnetic interference with the electric device, and consequently improving the reliability of the electric device in use.

BRIEF DESCRIPTION OF DRAWINGS

FIG. 1 is a schematic diagram of an electric device according to an embodiment of this application.
FIG. 2 is a schematic structural diagram of an electrochemical apparatus according to an embodiment of this application;
FIG. 3 is a cross-sectional view of the electrochemical apparatus shown in FIG. 2;
FIG. 4 is a schematic structural diagram of an electrode assembly according to an embodiment of this application.
FIG. 5 is a schematic winding diagram of an electrode plate assembly according to an embodiment of this application;
FIG. 6 is a schematic structural diagram of an electrode assembly and a first connector according to an embodiment of this application;
FIG. 7 is a schematic winding diagram of an electrode plate assembly according to still another embodiment of this application; and
FIG. 8 is a schematic structural diagram of an electrode assembly and a second connector according to an embodiment of this application.

List of reference signs:

| | |
|---|---|
| electrochemical apparatus | 100 |
| housing | 10 |
| first housing portion | 11 |
| top wall | 111 |
| through-hole | 1111 |
| bottom wall | 112 |
| sidewall | 113 |
| accommodation space | 11a |
| second housing portion | 12 |
| mounting portion | 121 |
| lead-out portion | 122 |
| electrode assembly | 20 |
| electrode plate assembly | 21 |
| first end face | 21a |
| second end face | 21b |
| first electrode plate | 211 |
| first current collector | 2111 |
| first region | 211a |
| first active layer | 2112 |
| second electrode plate | 212 |
| second current collector | 2121 |
| third region | 212a |
| second active layer | 2122 |
| first separator | 213 |
| second separator | 214 |
| first tab | 22 |

(continued)

| | |
|---|---|
| first connecting portion | 221 |
| first bent portion | 222 |
| second region | 222a |
| second tab | 23 |
| second connecting portion | 231 |
| second bent portion | 232 |
| fifth region | 232a |
| first connector | 30 |
| fourth region | 31 |
| second connector | 40 |
| sixth region | 41 |
| sealing element | 50 |
| winding center | D |
| width direction of first electrode plate | X |
| winding direction of electrode plate assembly from inside to outside | C |
| device body | 200 |
| electric device | 1000 |

## DETAILED DESCRIPTION

The following describes the technical solutions in some embodiments of this application with reference to drawings. Apparently, the described embodiments are merely a part of but not all of the embodiments of this application.

It is noted that in this application, "region center" refers to that a center of a region is the center of gravity of a planar shape of the region when the region is a continuous entirety. Understandably, the center of gravity of the planar shape can be determined by a hanging method. The planar shape is suspended with a thin string, and a straight line is drawn in the vertical direction from the start point of the thin string. The planar shape is suspended again at an endpoint different from the endpoint suspended for the first time, and another straight line is drawn by using the previously used method. The intersection of the two straight lines is the center of gravity of the planar shape. When the region is formed by multiple discrete regions, the center of the region is the center of a smallest circumscribed circle containing the multiple discrete regions. Understandably, the smallest circumscribed circle is a circle with the smallest radius containing the multiple discrete regions. A component considered to be "connected" to another component may be directly connected to the other component or may be connected to the other component through an intermediate component. A component considered to be "disposed on" another component may be directly disposed on the other component or may be disposed on the other component through an intermediate component. As used herein, the terms such as "top" and "bottom" and other similar expressions are merely for ease of description.

The terms "first", "second" and the like are merely intended to distinguish between different items but not intended to indicate or imply relative importance or implicitly specify the number of the indicated technical features, specific order, or order of precedence.

The term "parallel" is a description of an ideal state between two components. In an actual production or use state, one component may be approximately parallel to another component. The two components described as "parallel" may be not absolute straight lines or planes, but may be roughly straight lines or planes. An object is considered to be a "straight line" or "plane" if the overall extension direction of the object is a straight line or plane as viewed from a macro perspective.

It is appreciated that the dimensions and thicknesses of each member shown in the drawings are specified for ease of understanding and description. This application is not limited to the dimensions and thicknesses shown in the drawings. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes some embodiments of this application with reference to drawings. To the extent that no conflict occurs, the following embodiments and the features in the embodiments may be combined with each other.

An embodiment of this application provides an electric device 1000. The electric device 1000 includes an electrochemical apparatus 100.

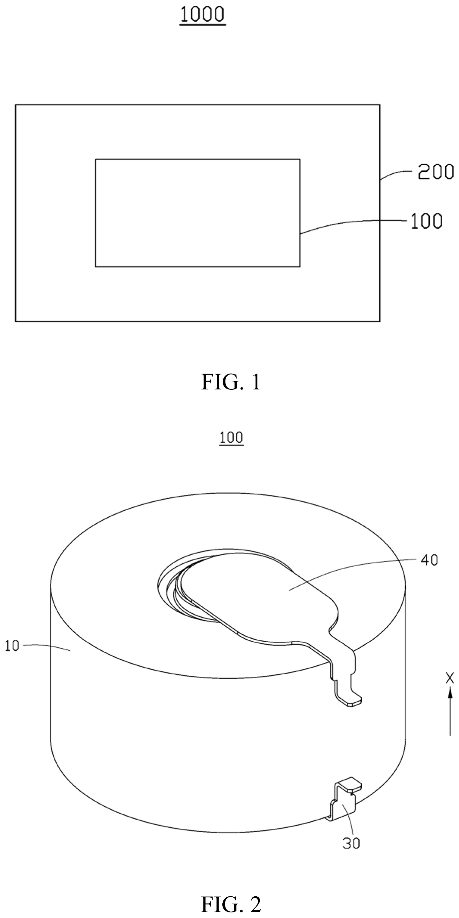

In some embodiments, referring to FIG. 1, the electric device 1000 further includes a device body 200. The electrochemical apparatus 100 is mounted in the device body 200, and is configured to supply power to the device body 200.

In some embodiments, the electric device 1000 may be a Bluetooth headset, a Bluetooth speaker, a mobile phone, a laptop computer, a tablet computer, an e-book player, an electrical toy, a game console, a video recorder, a portable recorder, a radio, a smart watch, a lighting lamp, a calculator, or the like, which are not enumerated here exhaustively.

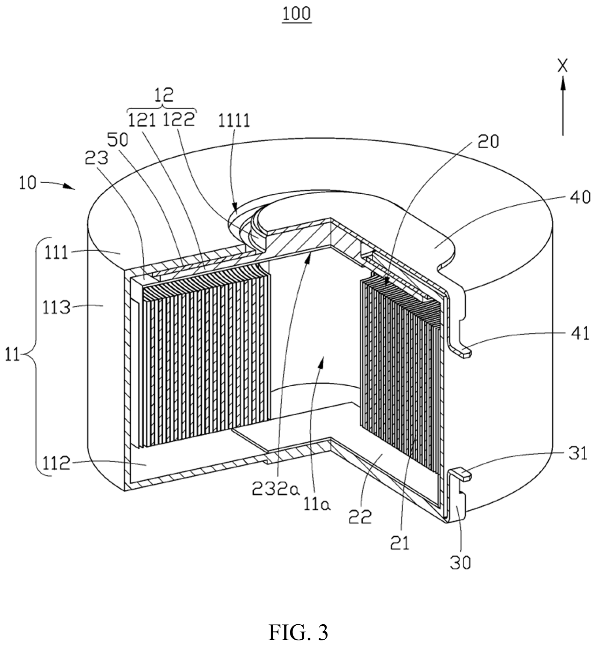

In some embodiments, referring to FIG. 2 and FIG. 3, the electrochemical apparatus 100 includes a housing 10, an electrode assembly 20, and a first connector 30. The electrode assembly 20 is accommodated in the housing 10. The first connector 30 is located outside the housing 10, and is connected to the housing 10.

In some embodiments, referring to FIG. 2 and FIG. 3, the housing 10 includes a first housing portion 11 and a second housing portion 12. The first housing portion 11 and the second housing portion 12 are dielectrically connected.

In some embodiments, referring to FIG. 3, the first housing portion 11 includes a top wall 111, a bottom wall 112, and a sidewall 113. The sidewall 113 is located between the top wall 111 and the bottom wall 112. The top wall 111 and the bottom wall 112 are both connected to the sidewall 113, and enclose and define an accommodate space 11a configured to accommodate the electrode assembly 20. The first housing portion 11 can protect the electrode assembly 20 and reduce the risk of external impact on the electrode assembly 20.

In some embodiments, referring to FIG. 3, the second housing portion 12 includes an electrode pole. The top wall 111 is provided with a through-hole 1111. The electrode pole is disposed in the through-hole 1111, and is dielectrically connected to the top wall 111.

In some embodiments, referring to FIG. 3, the electrode pole includes a mounting portion 121 and a lead-out portion 122. The mounting portion 121 is located in the accommodation space 11a, and is connected to the electrode assembly 20. The mounting portion 121 is also dielectrically connected to the top wall 111. The lead-out portion 122 extends through the through-hole 1111, and is at least partially exposed outside the accommodation space 11a.

In some embodiments, referring to FIG. 3, the electrochemical apparatus 100 further includes a sealing element 50. The sealing element 50 is disposed between the top wall 111 and the mounting portion 121, so as to dielectrically connect and seal the mounting portion 121 and the top wall 111.

In some embodiments, the sealing element 50 may be a sealing adhesive.

In some embodiments, the electrode pole may be made of a conductive metal such as copper, aluminum, or nickel. The electrode pole may be in the shape of a column, a hemisphere, a sheet, or a combination thereof.

In some embodiments, referring to FIG. 3, the electrode assembly 20 includes an electrode plate assembly 21, a first tab 22, and a second tab 23. The first tab 22 and the second tab 23 are both connected to the electrode plate assembly 21.

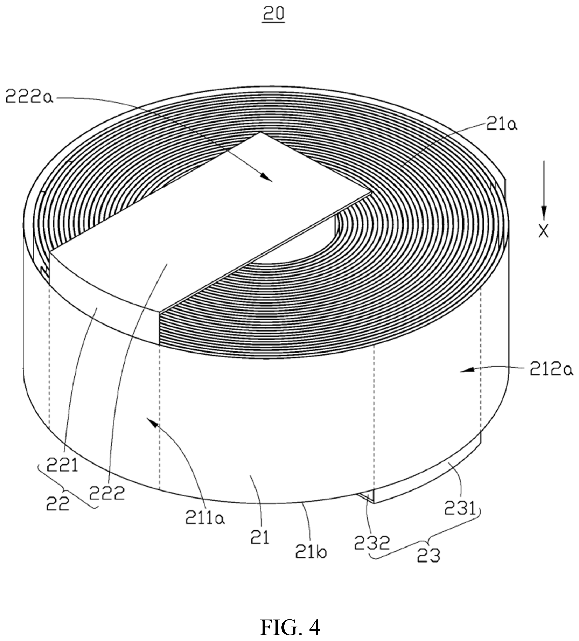

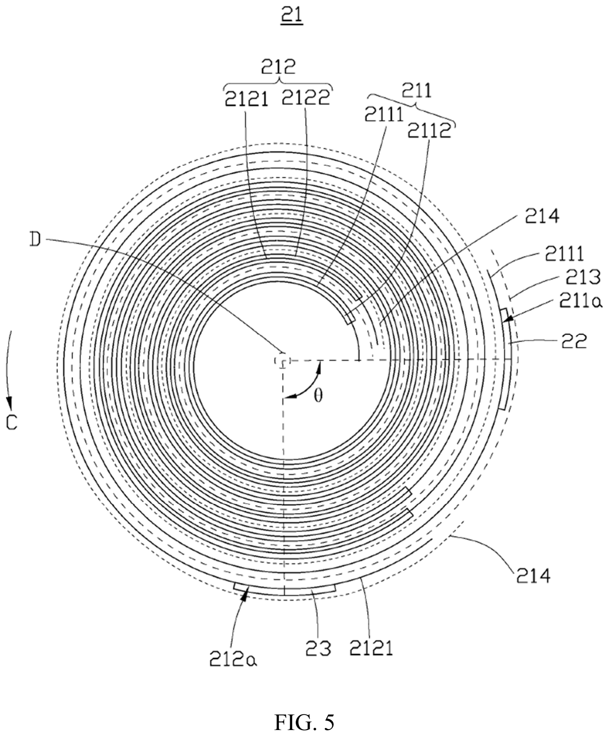

In some embodiments, referring to FIG. 4 and FIG. 5, the electrode plate assembly 21 includes a first electrode plate 211 and a second electrode plate 212 arranged in a wound manner. Along the width direction X of the first electrode plate 211, the wound electrode plate assembly 21 includes a first end face 21a and a second end face 21b opposite to each other. The first electrode plate 211 is of a first polarity, and the second electrode plate 212 is of a second polarity, the first polarity and the second polarity being different. As an example, the first electrode plate 211 is a negative electrode plate, and the second electrode plate 212 is a positive electrode plate; or, the first electrode plate 211 is a positive electrode plate, and the second electrode plate 212 is a negative electrode plate.

Referring to FIG. 5, the first electrode plate 211 includes a first current collector 2111 and a first active layer 2112 located on a surface of the first current collector 2111. The second electrode plate 212 includes a second current collector 2121 and a second active layer 2122 located on a surface of the second current collector 2121. The first current collector 2111 and the second current collector 2121 may be metal layers. For example, the first electrode plate 211 is a negative electrode plate. The first current collector 2111 may be a metal layer containing at least one of copper, nickel, tantalum, titanium, or the like, such as copper foil. The first active layer 2112 includes a negative active material. The negative active material may include at least one of graphite, hard carbon, soft carbon, silicon, a silicon-oxygen material, a silicon-carbon material, or the like. The second electrode plate 212 is a positive electrode plate. The second current collector 2121 may be a metal layer containing at least one of aluminum, nickel, tantalum, titanium, or the like, such as aluminum foil. The first active layer 2112 includes a positive active material. The positive active material may include at least one of lithium cobalt oxide, lithium nickel cobalt manganese oxide, lithium nickel cobalt aluminum oxide, lithium iron phosphate, lithium manganese iron phosphate, lithium manganese oxide, or the like.

In some embodiments, referring to FIG. 4 and FIG. 5, the first electrode plate 211 is connected to the first tab 22. The first tab 22 is connected to the first housing portion 11, so that the first tab 22 and the first housing portion 11 are endowed with a first polarity. The second electrode plate 212 is connected to the second tab 23. The second tab 23 is connected to the second housing portion 12, so that the second tab 23 and the second housing portion 12 are endowed with a second polarity. The winding start section of the first active layer 2112 is located on a winding inner side of the electrode plate assembly 21 relative to the winding start section of the second active layer 2122. The first tab 22 includes a first connecting portion 221 and a first bent portion 222. The first connecting portion 221 is connected to the first region 211a at the winding tail section of the first current collector 2111. Understandably, the first region 211a is a region of the first current collector 2111, the region being connected to the first connecting portion 221. Generally, the first region 211a assumes a specific planar shape. When the planar shape of the first region 211a is a continuous whole, the center of the first region 211a is defined as the center of gravity of the planar shape of the first region 211a. When the first region 211a is formed by multiple discrete regions (for example, the first current collector 2111 is connected to the first connecting portion 221 by multiple discrete dot-shaped regions), the center of the first region 211a is defined as the center of the smallest circumscribed circle containing the multiple discrete regions. The first bent portion 222 is bent toward the first end face 21a of the electrode plate assembly 21. Along the width direction X of the first electrode plate 211, the first bent portion 222 is located on one side of the electrode plate assembly 21. The first bent portion 222 is connected to the first housing portion 11, and the first bent portion 222 includes a second region 222a connected to the first housing portion 11. Understandably, the second region 222a is a region at which the first bent portion 222 is connected to the first housing portion 11. The method for determining the center of the second region 222a is the same as the method for determining the center of the first region 211a, and is not repeated here. The second tab 23 includes a second connecting portion 231 and a second bent portion 232. The second connecting portion 231 is connected to the third region 212a at the winding tail section of the second current collector 2121. Understandably, the third region 212a is a region at which the second current collector 2121 is connected to the second connecting portion 231. The method for determining the center of the third region 212a is the same as the method for determining the center of the first region 211a, and is not repeated here. The second bent portion 232 is bent toward the second end face 21b of the electrode plate assembly 21. Along the width direction X of the first electrode plate 211, the second bent portion 232 is located on one side of the electrode plate assembly 21 facing away from the first bent portion 222.

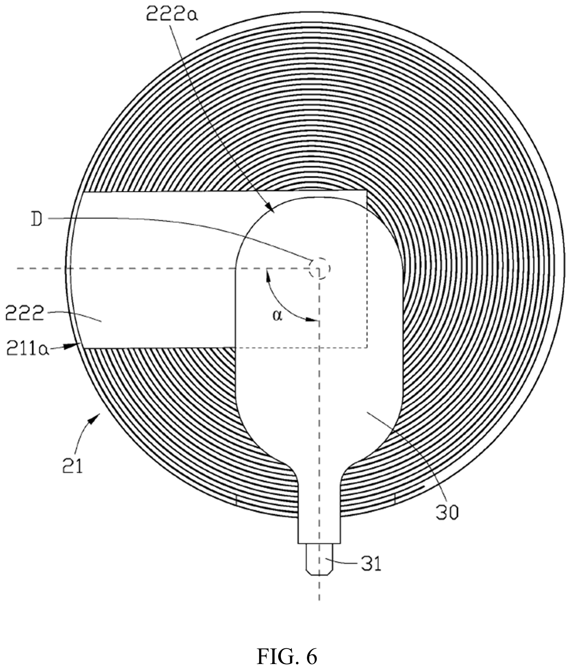

Still referring to FIG. 5, along the winding direction C of the electrode plate assembly 21 from inside to outside, the first region 211a extends beyond the third region 212a, and the winding length of the first region 211a extending beyond the third region 212a is less than one turn. When viewed along the width direction X of the first electrode plate 211, along the winding direction C of the electrode plate assembly 21 from inside to outside, an angle formed by rotating a ray from a winding center D of the electrode plate assembly 21 to the center of the third region 212a to a ray from the winding center D to the center of the first region 211a is $\theta$, satisfying: $45° \leq \theta \leq 135°$. Still referring to FIG. 3 and FIG. 6, the first connector 30 is connected to the first housing portion 11. The first connector 30 includes a fourth region 31 configured to be connected to an external load. The method for determining the center of the fourth region 31 is the same as the method for determining the center of the first region 211a, and is not repeated here. The first electrode plate 211 in the electrode plate assembly 21 is electrically connected to the external load through the first tab 22, the first housing portion 11, and the first connector 30. When viewed along the width direction X of the first electrode plate 211, an angle formed by rotating a ray from the center of the second region 222a to the center of the first region 211a to a ray from the center of the second region 222a to the center of the fourth region 31 is $\alpha$, satisfying: $-60° \leq \alpha \leq 45°$.

Along the winding direction C of the electrode plate assembly 21 from inside to outside, the angle $\alpha$ formed by rotating the ray from the center of the second region 222a to the center of the first region 211a to the ray from the center of the second region 222a to the center of the fourth region 31 is a positive value. Along a direction opposite to the winding direction of the electrode plate assembly 21 from inside to outside, the angle $\alpha$ formed by rotating the ray from the center of the second region 222a to the center of the first region 211a to the ray from the center of the second region 222a to the center of the fourth region 31 is a negative value.

Through research, the inventors of this application finds that due to the special spiral involute structure of a battery of a wound structure, an effective current path length of the first electrode plate 211 on the winding inner side is less than that of the second electrode plate 212 on the winding outer side, resulting in a relatively strong axial magnetic field at both end faces of the jelly roll. In addition, the current flowing through the first bent portion 222, parallel to the end face of the wound structure, of the first tab 22 and the first connector 30 disposed outside the housing 10 also affects the axial magnetic field. In this application, on the one hand, by extending the effective length of the first electrode plate 211 on the winding inner side, this application makes the first region 211a to extend beyond the third region 212a, and makes $\theta$ to satisfy: $45° \leq \theta \leq 135°$. When the electrode assembly 20 discharges and generates a current, a magnetic field generated by an overhang of the first electrode plate 211 beyond the third region 212a can at least partially counteract the axial magnetic field generated by the spiral involute structure. On the other hand, by controlling the first tab 22 and the first connector 30 to satisfy: $-60° \leq \alpha \leq 45°$, the axial magnetic field generated by the current that flows through the first tab 22 and the first connector 30 further counteracts the axial magnetic field generated by the spiral involute structure at the first end face 21a, thereby significantly reducing the interference of the electrochemical apparatus 100 with the electric device 1000.

As an example, $\theta$ may be 45°, 60°, 75°, 90°, 105°, 120°, 135°, or a range formed by any two thereof. As an example, $\alpha$ may be -60°, -45°, -30°, -25°, -10°, 0°, 10°, 25°, 35°, 45°, or a range formed by any two thereof.

In some embodiments, $60° \leq \theta \leq 120°$. In this way, the magnetic field generated by the overhang of the first electrode plate 211 beyond the third region 212a can more effectively counteract the axial magnetic field generated by the spiral involute structure of the electrode plate assembly 21, thereby further reducing the interference of the electrochemical apparatus 100 with the electric device 1000.

In some embodiments, $-25° \leq \alpha \leq 25°$. In this way, the axial magnetic field generated by the current flowing through the first tab 22 and the first connector 30 more effectively counteracts the axial magnetic field generated by the spiral involute structure of the electrode plate assembly 21, thereby further reducing the interference of the electrochemical apparatus 100 with the electric device 1000.

In some embodiments, $30° \leq \theta + \alpha \leq 135°$. In this way, the magnetic field generated by the overhang of the first electrode plate 211 beyond the third region 212a and the axial magnetic field generated by the current flowing through the first tab 22 and the first connector 30 can more effectively counteract the axial magnetic field generated by the spiral involute structure of the electrode plate assembly 21, thereby further reducing the interference of the electrochemical apparatus 100 with the electric device 1000. As an example, $\theta+\alpha$ may be 30°, 45°, 60°, 75°, 90°, 105°, 120°, 135°, or a range formed by any two thereof.

In some embodiments, referring to FIG. 3, FIG. 4, and FIG. 7, the first bent portion 222 of the first tab 22 is connected to the bottom wall 112. The second bent portion 232 of the second tab 23 is connected to the mounting portion 121 of the electrode pole. Along the winding direction C of the electrode plate assembly 21 from inside to outside, the winding tail section of the first current collector 2111 includes a blank section extending beyond the first region 211a and uncoated with the first active layer 2112 on any surface. The blank section covers the winding tail section of the second current collector 2121. In this way, the blank section of the first current collector 2111 is disposed between the winding tail section of the second current collector 2121 and the first housing portion 11, thereby enhancing the isolation between the second current collector 2121 and the first housing portion 11, and consequently reducing the risk of short circuit caused by direct contact between the second current collector 2121 and the first housing portion 11.

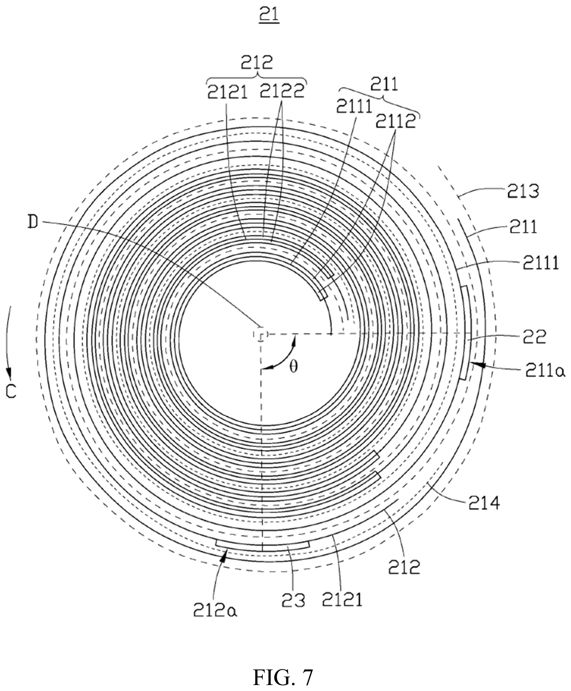

In some embodiments, referring to FIG. 5 and FIG. 7, the first electrode plate 211 is a negative electrode plate, and the second electrode plate 212 is a positive electrode plate. Along the direction opposite to the winding direction C of the electrode plate assembly 21 from inside to outside, the winding start section of the first active layer 2112 extends beyond the winding start section of the second active layer 2122.

In some embodiments, referring to FIG. 5 and FIG. 7, along the winding direction C of the electrode plate assembly 21 from inside to outside, the winding tail section of the first active layer 2112 extends beyond the winding tail section of the second active layer 2122. In this way, in the winding direction C of the electrode plate assembly 21, the end portion of the negative active layer extends beyond the positive active layer, thereby reducing the risk of lithium plating and improving the safety of the electrochemical apparatus 100.

In some embodiments, referring to FIG. 5 and FIG. 7, the electrode plate assembly 21 further includes a first separator 213. The first separator 213 is disposed between the first electrode plate 211 and the second electrode plate 212. Along the winding direction C of the electrode plate assembly 21 from inside to outside, the winding tail section of the first separator 213 extends beyond the first electrode plate 211, so that the winding tail end of the first electrode plate 211 is covered by the first separator 213, thereby reducing the risk of direct contact between the first electrode plate 211 and the second electrode plate 212.

In some embodiments, referring to FIG. 5 and FIG. 7, the electrode plate assembly 21 further includes a second separator 214. The second separator 214 is disposed between the first electrode plate 211 and the second electrode plate 212. Along the winding direction C of the electrode plate assembly 21 from inside to outside, the winding tail section of the second separator 214 extends beyond the second electrode plate 212, allowing the winding tail end of the second electrode plate 212 to be covered by the second separator 214, thereby reducing the risk of direct contact between the second electrode plate 212 and the first electrode plate 211 or the housing 10.

In some embodiments, along the winding direction C of the electrode plate assembly 21 from inside to outside, the winding tail end of the first separator 213 and/or the second separator 214 is bonded and fixed to the main body of the electrode plate assembly 21 by adhesive tape, thereby reducing the risk of curling at the winding tail end of the first separator 213 and/or the second separator 214.

In some embodiments, referring to FIG. 5, and FIG. 7, the second electrode plate 212 is located between the first separator 213 and the second separator 214. The first electrode plate 211 is located between the first separator 213 and the second separator 214.

In some embodiments, the first separator 213 and the second separator 214 may be made of materials such as polyethylene (PE) or polypropylene (PP), and are configured to isolate the first electrode plate 211 from the second electrode plate 212.

In some embodiments, referring to FIG. 4, the first bent portion 222 extends along a direction parallel to the first end face 21a.

In some embodiments, the first connecting portion 221 may be connected to the first current collector 2111 by welding, bonding, press-fitting, or other means; and the first bent portion 222 may be connected to the first housing portion 11 by welding, bonding, or press-fitting, or other means, which are not specifically limited here.

In some embodiments, referring to FIG. 3 and FIG. 4, the second bent portion 232 is connected to the second housing portion 12, and the second bent portion 232 includes a fifth region 232a connected to the second housing portion 12. Understandably, the fifth region 232a is a region at which the second bent portion 232 is connected to the second housing portion 12. The method for determining the center of the fifth region 232a is the same as the method for determining the center of the first region 211a, and is not repeated here.

In some embodiments, referring to FIG. 4, the second bent portion 232 extends along a direction parallel to the second end face 21b.

In some embodiments, the second connecting portion 231 may be connected to the second current collector 2121 by welding, bonding, press-fitting, or other means; and the second bent portion 232 may be connected to the second housing portion 12 by welding, bonding, or press-fitting, or other means, which are not specifically limited here.

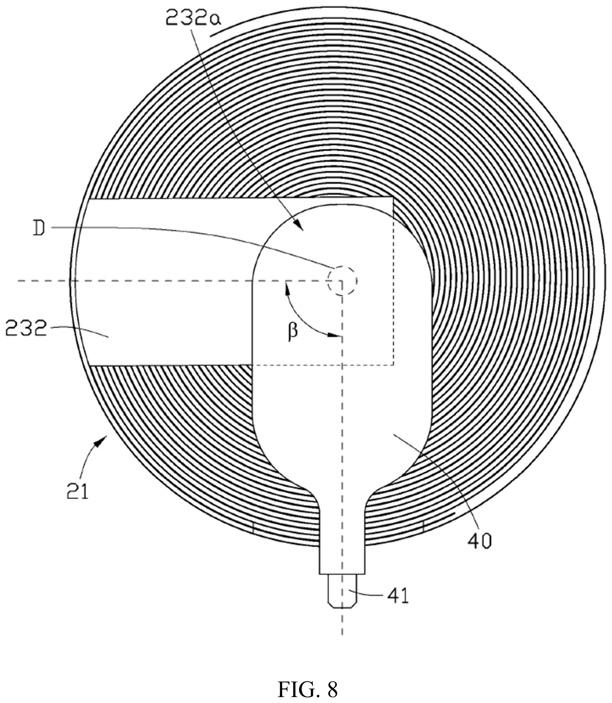

In some embodiments, referring to FIG. 3 and FIG. 8, the electrochemical apparatus 100 further includes a second connector 40. The second connector 40 is connected to the second housing portion 12, and includes a sixth region 41 configured to be connected to an external load. The method for determining the center of the sixth region 41 is the same as the method for determining the center of the first region 211a, and is not repeated here. When viewed along the width direction X of the first electrode plate 211, an angle formed by rotating a ray from the center of the fifth region 232a to the center of the third region 212a to a ray from the center of the fifth region 232a to the center of the sixth region 41 is $\beta$, satisfying: $-60° \leq \beta \leq 45°$. Along the winding direction C of the electrode plate assembly 21 from inside to outside, the angle $\beta$ formed by rotating the ray from the center of the fifth region 232a to the center of the third region 212a to the ray from the center of the fifth region 232a to the center of the sixth region 41 is a positive value. Along the direction opposite to the winding direction C of the electrode plate assembly 21 from inside to outside, the angle $\beta$ formed by rotating the ray from the center of the fifth region 232a to the center of the third region 212a to the ray from the center of the fifth region 232a to the center of the sixth region 41 is a negative value.

By controlling the second tab 23 and the second connector 40 to satisfy $-60° \leq \beta \leq 45°$, the axial magnetic field generated by the current flowing through the second tab 23 and the second connector 40 further counteracts the axial magnetic field generated by the spiral involute structure at the second end face 21b, thereby further reducing the interference with the electric device 1000.

In some embodiments, the electrochemical apparatus 100 further includes an insulation piece (not shown in the figure). The insulation piece is disposed between the housing 10 and the electrode plate assembly 21. This reduces the risk of direct contact between the electrode plate assembly 21 and the housing 10, thereby reducing the risk of an internal short circuit in the electrochemical apparatus 100.

In order to verify the effect for the electrochemical apparatus 100 of this application in counteracting the magnetic field generated in the axial direction, the following comparative tests are performed.

Using a Bluetooth headset fitted with a wound cylindrical steel-shell battery as an example, a voice coil radius of the Bluetooth headset is 3.5 mm, and a negative electrode end (the bottom wall 112 of the housing 10) is located near the speaker of the Bluetooth headset. The level of current noise of the Bluetooth headset is tested at different values of $\alpha$ and $\theta$. The test results are shown in Table 1 below.

In the test, by changing the welding position of the first tab 22 and the second tab 23, the value of the angle $\theta$ between the first tab 22 and the second tab 23 is changed; and by changing the connection route direction of the first connector 30, the value of the angle $\alpha$ between the first connector 30 outside the housing 10 and the first tab 22 is changed.

### Table 1 Current noise level (dB) of Bluetooth earphones at different values of α and θ

| θ / α | 0° | 30° | 45° | 60° | 90° | 120° | 135° | 150° | 180° |
|---|---|---|---|---|---|---|---|---|---|
| 0° | -3 | -4.2 | -4.5 | -5.1 | -6 | -5.2 | -4.6 | -4.1 | -2.5 |
| 25° | -2.5 | -3.4 | -3.8 | -4.4 | -5.5 | -4.3 | -3.9 | -3.5 | -2.5 |
| 45° | -2 | -3.2 | -3.6 | -4.1 | -5 | -4.1 | -3.7 | -3.3 | -2.4 |
| 90° | -1 | -2.1 | -2.9 | -3.3 | -4 | -3.2 | -2.7 | -2 | -1.1 |
| 135° | -0.8 | -2.2 | -2.5 | -3.2 | -4 | -3.1 | -2.6 | -2.1 | -1.7 |
| 180° | -1 | -1.8 | -2.3 | -3.0 | -3.5 | -2.9 | -2.2 | -1.7 | -1.2 |
| -135° | -1 | -2 | -2.5 | -3.1 | -3.9 | -3.3 | -2.6 | -2.2 | -1.1 |
| -90° | -1.5 | -2.4 | -2.7 | -3.5 | -4.2 | -3.5 | -2.9 | -2.5 | -1.5 |
| -60° | -1.8 | -2.8 | -3.2 | -3.8 | -4.8 | -3.9 | -3.3 | -2.9 | -2 |
| -25° | -2.2 | -3.2 | -3.7 | -4.2 | -5.3 | -4.3 | -3.8 | -3.5 | -2.4 |

It is noted that the smaller the noise, the lower the decibel value. 0 dB is the smallest noise audible to the human ear.

Referring to Table 1 and FIG. 5, when the angle $\theta$ satisfies: $45° \leq \theta \leq 135°$ and the angle $\alpha$ satisfies: $-60° \leq \alpha \leq 45°$, the Bluetooth headset exhibits a significantly reduced current noise level. This is because, on the one hand, by extending the effective length of the negative electrode plate on the winding inner side, this application makes the first region to extend beyond the third region, and makes $\theta$ to satisfy: $45° \leq \theta \leq 135°$. When the electrode assembly discharges and generates a current, a magnetic field generated by an overhang of the negative electrode plate beyond the third region can at least partially counteract the axial magnetic field generated by the spiral involute structure. On the other hand, by controlling the first tab and the first connector to satisfy: $-60° \leq \alpha \leq 45°$, the axial magnetic field generated by the current that flows through the first tab and the first connector further counteracts the axial magnetic field generated by the spiral involute structure at the negative electrode end face, thereby significantly reducing the interference of the battery with the Bluetooth headset.

Further, when the angle $\theta$ satisfies: $60° \leq \theta \leq 120°$ and the angle $\alpha$ satisfies: $-25° \leq \alpha \leq 25°$, the Bluetooth headset exhibits an even lower current noise level. In this case, the magnetic field generated by the overhang of the negative electrode plate beyond the third region and the axial magnetic field generated by the current flowing through the first tab and the first connector can more effectively counteract the axial magnetic field generated by the spiral involute structure of the electrode plate assembly, thereby further reducing the interference of the battery with the Bluetooth headset.

In addition, a person of ordinary skill in the art is aware that the above embodiments are merely intended to illustrate this application, but not intended to limit this application. Any modifications, equivalent substitutions, improvements, and the like made without departing from the essence and principles of this application still fall within the protection scope of this application.

### Claims

1. An electrochemical apparatus, **characterized in that**, the electrochemical apparatus comprises a housing, an electrode assembly, and a first connector, the electrode assembly is accommodated in the housing, and the first connector is located outside the housing;

the housing comprises a first housing portion and a second housing portion of opposite polarities;

the electrode assembly comprises an electrode plate assembly, a first tab, and a second tab;

the electrode plate assembly comprises a first electrode plate and a second electrode plate arranged in a wound manner, the first electrode plate comprises a first current collector and a first active layer located on a surface of the first current collector, the second electrode plate comprises a second current collector and a second active layer located on a surface of the second current collector, and a winding start section of the first active layer is located on a winding inner side of the electrode plate assembly relative to a winding start section of the second active layer;

the first tab comprises a first connecting portion and a first bent portion, the first connecting portion is connected to a first region of a winding tail section of the first current collector, the first bent portion is bent toward a first end face of the electrode plate assembly, and along a width direction of the first electrode plate, the first bent portion is located on one side of the electrode plate assembly, and the first bent portion comprises a second region connected to the first housing portion;

the second tab comprises a second connecting portion and a second bent portion, the second connecting portion is connected to a third region of a winding tail section of the second current collector, the second bent portion is bent toward a second end face of the electrode plate assembly, the second end face is disposed opposite to the first end face along the width direction of the first electrode plate, and along the width direction of the first electrode plate, the second bent portion is located on one side of the electrode plate assembly facing away from the first bent portion;

along a winding direction of the electrode plate assembly from inside to outside, the first region extends beyond the third region, and a winding length of the first region extending beyond the third region is less than one turn;

the first connector is connected to the first housing portion, and comprises a fourth region configured to be connected to an external load;

when viewed along the width direction of the first electrode plate, along the winding direction of the electrode plate assembly from inside to outside, an angle formed by rotating a ray from a winding center of the electrode plate assembly to a center of the third region to a ray from the winding center to a center of the first region is $\theta$, satisfying: $45° \leq \theta \leq 135°$;

when viewed along the width direction of the first electrode plate, an angle formed by rotating a ray from a center of the second region to the center of the first region to a ray from the center of the second region to a center of the fourth region is $\alpha$, satisfying: $-60° \leq \alpha \leq 45°$; and

along the winding direction of the electrode plate assembly from inside to outside, the angle $\alpha$ formed by rotating the ray from the center of the second region to the center of the first region to the ray from the center of the second region to the center of the fourth region is a positive value; and along a direction opposite to the winding direction of the electrode plate assembly from inside to outside, the angle $\alpha$ formed by rotating the ray from the center of the second region to the center of the first region to the ray from the center of the second region to the center of the fourth region is a negative value.

2. The electrochemical apparatus according to claim 1, **characterized in that**, the electrochemical apparatus satisfies at least one of the following conditions:

   (1)

$$60° \leq \theta \leq 120°;$$

   or
   (2)

$$-25° \leq \alpha \leq 25°.$$

3. The electrochemical apparatus according to claim 1, **characterized in that**, $30° \leq \theta + \alpha \leq 135°$.

4. The electrochemical apparatus according to claim 1, **characterized in that**, the first electrode plate is a negative electrode plate, and the second electrode plate is a positive electrode plate, satisfying at least one of the following conditions:

(1) along the direction opposite to the winding direction of the electrode plate assembly from inside to outside, the winding start section of the first active layer extends beyond the winding start section of the second active layer; or
(2) along the winding direction of the electrode plate assembly from inside to outside, a winding tail section of the first active layer extends beyond a winding tail section of the second active layer.

5. The electrochemical apparatus according to claim 1, **characterized in that**, the first housing portion comprises a top wall, a bottom wall, and a sidewall; the first bent portion is connected to the bottom wall; the second housing portion comprises an electrode pole; the top wall is provided with a through-hole; and the electrode pole is disposed in the through-hole.

6. The electrochemical apparatus according to claim 5, **characterized in that**, along the winding direction of the electrode plate assembly from inside to outside, the winding tail section of the first current collector comprises a blank section extending beyond the first region and uncoated with the first active layer on any surface, and the blank section covers the winding tail section of the second current collector.

7. The electrochemical apparatus according to claim 1, **characterized in that**, the second bent portion comprises a fifth region connected to the second housing portion, the electrochemical apparatus further comprises a second connector, and the second connector is connected to the second housing portion and comprises a sixth region configured to be connected to an external load;

when viewed along the width direction of the first electrode plate, an angle formed by rotating a ray from a center of the fifth region to the center of the third region to a ray from the center of the fifth region to a center of the sixth region is $\beta$, satisfying: $-60° \leq \beta \leq 45°$; and
along the winding direction of the electrode plate assembly from inside to outside, the angle $\beta$ formed by rotating the ray from the center of the fifth region to the center of the third region to the ray from the center of the fifth region to the center of the sixth region is a positive value; and along the direction opposite to the winding direction of the electrode plate assembly from inside to outside, the angle $\beta$ formed by rotating the ray from the center of the fifth region to the center of the third region to the ray from the center of the fifth region to the center of the sixth region is a negative value.

8. The electrochemical apparatus according to any one of claims 1 to 7, **characterized in that**, the electrochemical apparatus satisfies at least one of the following conditions:

(1) the electrode plate assembly further comprises a first separator, the first separator is disposed between the first electrode plate and the second electrode plate, and along the winding direction of the electrode plate assembly from inside to outside, a winding tail section of the first separator extends beyond the first electrode plate; or
(2) the electrode plate assembly further comprises a second separator, the second separator is disposed between the first electrode plate and the second electrode plate, and along the winding direction of the electrode plate assembly from inside to outside, a winding tail section of the second separator extends beyond the second electrode plate.

9. The electrochemical apparatus according to any one of claims 1 to 7, **characterized in that**, the electrochemical apparatus further comprises an insulation piece, and the insulation piece is disposed between the housing and the electrode plate assembly.

10. An electric device, **characterized in that**, the electric device comprises the electrochemical apparatus according to any one of claims 1 to 9.

1000

FIG. 1

100

FIG. 2

FIG. 3

20

FIG. 4

FIG. 5

FIG. 6

FIG. 7

FIG. 8

## INTERNATIONAL SEARCH REPORT

| International application No. |
| --- |
| **PCT/CN2023/103963** |

| A. | CLASSIFICATION OF SUBJECT MATTER |
| --- | --- |

H01M50/50(2021.01)i; H01M10/0587(2010.01)i; H01M50/502(2021.01)i; H01M50/531(2021.01)i; H01M50/533(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 第一, 上, 顶, 正, 极耳, 角度, 夹角, 第二, 下, 底, 负, 端, 连接件, 导电件, 连接片, 导电片, 汇流, 端子, 极片, first, upper, top, anode, angle, second, lower, bottom, cathode, end, pole tab, pole piece, connect, conduct, terminal, bar

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114938691 A (AMPEREX TECHNOLOGY LTD.) 23 August 2022 (2022-08-23) description, paragraphs [0087]-[0152], and figures 1-12 | 1-10 |
| Y | CN 114583236 A (AMPEREX TECHNOLOGY LTD.) 03 June 2022 (2022-06-03) description, paragraphs [0003]-[0152], and figures 1-11 | 1-10 |
| Y | CN 114420994 A (SPRINGPOWER TECHNOLOGY (SHENZHEN) CO., LTD.) 29 April 2022 (2022-04-29) description, paragraphs [0036]-[0082], and figures 1-6 | 1-10 |
| Y | CN 217485535 U (SPRINGPOWER TECHNOLOGY (SHENZHEN) CO., LTD.) 23 September 2022 (2022-09-23) description, paragraphs [0030]-[0076], and figures 1-6 | 1-10 |
| A | US 2022109193 A1 (CONTEMPORARY AMPEREX TECHNOLOGY CO., LTD.) 07 April 2022 (2022-04-07) entire document | 1-10 |

| ☐ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 October 2023** | **25 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103963**

| Patent document cited in search report | | | Publication date (day/month/year) | Patent family member(s) | | | Publication date (day/month/year) |
|---|---|---|---|---|---|---|---|
| CN | 114938691 | A | 23 August 2022 | CN | 216288852 | U | 12 April 2022 |
| | | | | WO | 2023070590 | A | 04 May 2023 |
| CN | 114583236 | A | 03 June 2022 | | None | | |
| CN | 114420994 | A | 29 April 2022 | CN | 217086651 | U | 29 July 2022 |
| CN | 217485535 | U | 23 September 2022 | | None | | |
| US | 2022109193 | A1 | 07 April 2022 | EP | 3940854 | A1 | 19 January 2022 |
| | | | | EP | 3940854 | A4 | 08 June 2022 |
| | | | | WO | 2021027602 | A1 | 18 February 2021 |
| | | | | CN | 210006850 | U | 31 January 2020 |

Form PCT/ISA/210 (patent family annex) (July 2022)